# EUROPEAN PATENT SPECIFICATION

(11) **EP 0 462 351 B1**
(45) Date of publication and mention of the grant of the patent: **14.02.1996**
(21) Application number: 90830277.1
(22) Date of filing: 15.06.1990
(51) Int. Cl.: F16L 55/12, F16L 55/11

(54) **Mechanical expansion plug system**
Mechanische Ausdehnungsstopfenanordnung
Système à bouchon mécanique expansif

(30) Priority: 20.06.1990 IT 484989
(43) Date of publication of application: 27.12.1991
(73) Proprietor: Taglioli, Giulio, I-40054 Budrio (BO) (IT)
(72) Inventor: Taglioli, Giulio, I-40054 Budrio (BO) (IT)
(74) Representative: Coppi, Cecilia

(56) References cited:
- DD-A- 277 954
- DE-A- 3 120 183
- GB-A- 2 117 863

## Description

This invention concerns a mechanical expansion plug system specifically designed to close off with a tight seal pipes, receptacles and conduits in general which are subjected to high pressure by the fluid contained in them.

At the present time, when a pipe in a gas supply system needs to be repaired or altered, a bypass has to be fitted to the pipe in the following way: two cylindrical caps, fitted with seal valves, are welded on to the pipe, at right angles to it, above and below the area involved, so as to form two "T"s. Next, the pipe is perforated with a cutter through these caps and a seal introduced through the circular aperture thereby obtained into the section of pipe involved. In this way a diversion can be made above and below these sections, permitting operations to be performed on the isolated section while at the same time ensuring continuity in the flow of gas.

Clearly the seal achieved with the cut-off element is extremely important as far as safety is concerned, and the introduction of the cut-off element must therefore be secure and as independent as possible from the conditions in which operations are performed.

To achieve this, the systems currently in use for blocking the flow of pressurized gas consist basically of a truncated cone shaped plug in soft rubber, mounted at right angles to a support shaft, which is introduced through the "T" and forced inside the pipe.

However this system presents the following disadvantages:
- the insertion of the plug through the "T" is a tricky manoeuvre since the diameter of the cap is greater than the pipe diameter in which the seal is to be made, making the operation lengthy and laborious;
- the forcing of the plug through the cut section may damage it since the edges created by the boring operation are sharp and cutting and as a result have an adverse affect on the seal that the plug is required to provide once inserted. The outcome of the operation may therefore depend to a large extent on the skill of the operator and on the result of the cutting operation;
- the plug's seal under the pressure exerted by the gas is achieved by the radial reaction on the wall of the pipe generated by the inherent elasticity of the plug. This reaction is limited insofar as the dimensions of the plug have to be limited in order to make its introduction easier. To this should be added the fact that the circular section of the pipe may be impaired or irregular, as a result of weld seams for example, a fact which further limits the tightness of the plug seal. Furthermore, as a result of this, the same plug cannot be applied to different diameters, since it would be virtually impossible to achieve a seal through the diversion and the seal itself would be poor.

In order to overcome these disadvantages the German Patent DE-A-3 120 183 (Steinmetz) discloses a mechanical expansion plug system including a support body with two convex truncated cone seats against which an O-ring 6 is pressed and expands to form the seal. The system for the expansion of the 0-ring is realised with a screw that move the two truncated cone seats one in respect to the other. The screw is operated directly by a straight shaft and a handle and it is on the same axis of the pipe. Therefore is necessary that the pipe has an open end, this is a great limitation, because requires a series of preliminary operations for isolating an open end of the pipe. The aim of this invention is to create a mechanical expansion plug system for the closing off of pressurized pipes, that can be inserted on a side opening of the pipe without the necessity of an open end.

A mechanical expansion plug according to the invention is disclosed in the claim.

Other aims and advantages will become clear in the description that follows and in the annexed schematic drawing which shows one of the forms that the invention may take.

The single illustration shows the system fitted at right angles on a support shaft.

The body of the plug 1 has a truncated cone shaped surface to which is fitted a rubber "O-Ring" 2.

This ring is held and forced down on the cone by a nylon cup, this too in the shape of a truncated cone; it has radial incisions designed to enhance its deformability and presents a retaining groove and guide 4 to the ring.

The cup is in turn held and forced against the conical seat of the plug by a metal snug 5, bored and threaded in the centre, which threads on to the end of a pin coaxial to the conical seat of the support body and the cup. The pin and snug are free to move in a cylindrical cavity inside the plug body.

By transmitting drive to the pin by means of a rotating cam, which turns in a hole perpendicular to the axis of the pin made on the opposite side to the threaded hole, the cup is pressed down by the snug on the ring which, opposed by the conical seat of the plug, expands against the inside surface of the section to be blocked.

In this example, the cam which drives the pin is located at the end of a shaft rotating around its own axis 7, inside the support shaft, by means of a manually operated handle.

The stroke of the pin, which is obtained by rotating the cam through 180°, thereby achieving the expansion of the seal ring, is constant. The final diameter achieved by the ring after the application of drive can be subjected to fine or broad adjustment by tightening the snug 5 to a greater or lesser degree on -the threaded pin 6. The plug system therefore achieves the dual objective of expansion of the cut-off element only when it is in place inside the section to be isolated, into which it can be introduced easily when in its rest position, and controlled expansion through the regulation mechanism described above.

This makes the device particularly useful for the blocking of apertures on fragile materials on which a maximum prescribed pressure has to be exerted.

The size of the plug, during its introduction into the pipe, is limited to dimensions that are consistently smaller than those of the diameter of the pipe itself, until the expansion operation is performed, making the operator's task easier and quicker.

A further benefit deriving from the small size of the plug is that there is sufficient margin to ensure that the seal element, a rubber O-ring, is not damaged when passing through the cut area, since the ring is protected by the structure of the plug. Another advantage is that the pressure exerted by the expansion plug on the walls of the pipe is determined by the degree of expansion applied by the mechanical transmission, which makes it possible to obtain radial reaction - and hence pressure seal - values greater than those generated purely by the elastic reaction of the plug.

Since the introduction of the plug presents no difficulties nor any possibility of damage, and since the expansion is controlled by a mechanical transmission, the operation gives broadly reliable results. The system can be used in all those cases in which cylindrical conduits, such as pipes and ducts, and the necks of receptacles such as bottles, phials, tanks, etc., need to be sealed off. According to the application and, in particular, on the basis of the forces at play, of the degree of seal required by the blocking device, and of production cost considerations, this system may be made from plastic or other material, since the seal ring is always made from elastic rubber.

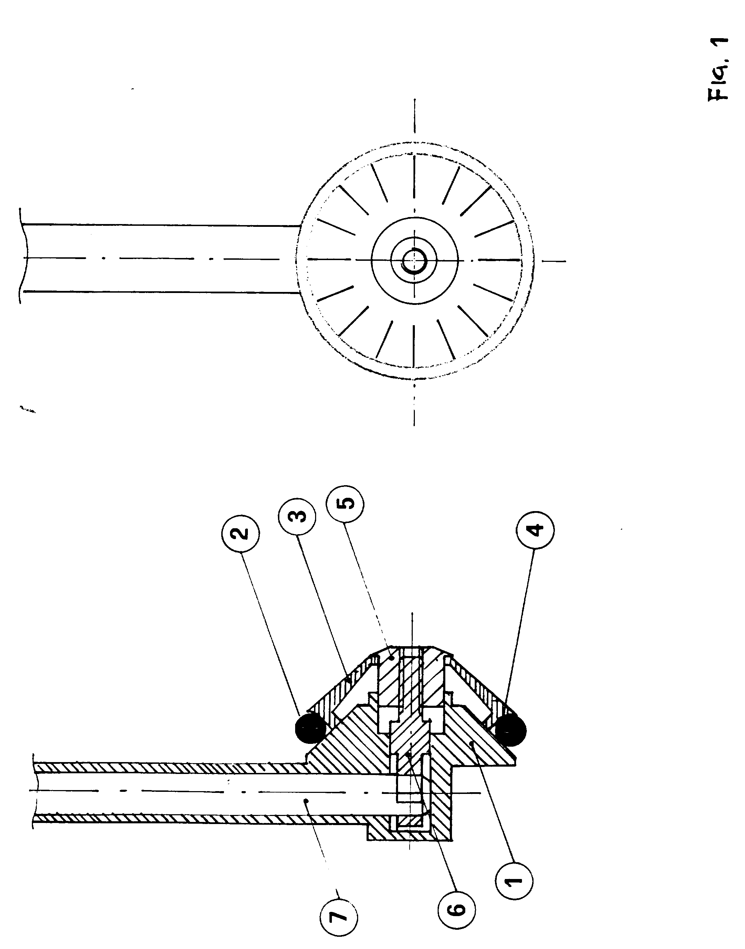

## Claims

1. Mechanical expansion plug system for closing off a pipe, comprising a metal or plastic support body, including a support sleeve, which present a convex truncated cone seat against which an O-ring is pressed and expands to form the seal, said O-ring being forced down by a plastic cup, this too a truncated cone in shape, whose purpose is to guide and protect the O-ring; the cup is subjected to thrust by a mechanical system consisting of a metal or plastic snug, the outer edge of which forces down the cup, made integral, by means of an adjustable screw and nut screw connection with a pin, said pin being free to move inside the support body driven by a shaft rotating around its own axis,
said support sleeve, in which rotates said shaft, extending at right angle to the axis of the convex truncated cone seat, and at one end of the shaft being provided a cam which engages in a hole perpendicular to the axis of the pin made on the opposite end of the threaded end of the pin.

## Patentansprüche

1. Mechanisches Dübel-System zum Schließen eines Rohrs, das System beinhaltet eine Metall- oder Kunststoffhalterung mit Haltemuffe, in der ein nach außen gewölbter Kegelstumpfsitz angebracht ist, gegen den ein O-Ring gedrückt wird, der sich ausdehnt, um die Dichtung zu formen. Der O-Ring wird von einem Kunststoffdeckel (auch dieser in Kegelstumpfform) niedergedrückt, dessen Aufgabe es ist, den O-Ring zu führen und zu schützen; der Deckel wird von einem aus einer Metall- oder Kunststoff-Nase bestehenden Mechaniksystem gedrückt, das äußere Ende der Nase drückt den Deckel nach unten; der Deckel ist mit Hilfe einer Stellschraube und einer Schraubenmutterverbindung mit Stift befestigt. Der Stift kann sich im Inneren der Halterung, von einem um die eigene Achse rotierenden Schaft betrieben, frei bewegen.
Die Haltemuffe, in der dieser Schaft rotiert, dehnt sich im rechten Winkel zu der Achse des nach außen gewölbten Kegelstumpfsitzes aus, an einem Ende ist der Schaft mit einem Nocken versehen, der in ein im rechten Winkel zur Achse des Stiftes stehendes Loch einrastet, das am gegenüberliegenden Ende des Stiftgewindes angebracht ist.

## Revendications

1. Système de bouchon à dilatation mécanique permettant de fermer un tuyau, comportant un corps de support métallique ou plastique comprenant un manchon de support qui présente un logement tronconique convexe sur lequel est comprimé un joint torique qui se dilate et crée donc l'étanchéité. Ledit joint torique est poussé en bas par une cuvette en plastique qui est, elle aussi, en forme de tronc de cône et a pour fonction de guider et de protéger le joint torique; la cuvette est soumise à une poussée par un système mécanique constitué d'un ergot métallique ou plastique; le bord extérieur de ce dernier pousse la cuvette en bas, celle-ci étant rendue solidaire, et ce au moyen d'un accouplement à vis et écrou réglable, d'un goujon, ce goujon étant libre de se déplacer dans le corps de support, entraîné par un arbre tournant autour de son axe; ledit manchon de support dans lequel tourne l'arbre sus-mentionné, s'allonge à angle droit par rapport à l'axe du logement tronconique convexe et à l'une des extrémités de l'arbre est prévue une came qui s'enclenche dans un trou, perpendiculaire à l'axe du goujon, situé à l'extrémité du goujon opposée à celle filetée.
